# EUROPEAN PATENT APPLICATION

(11) **EP 3 525 091 A1**
(43) Date of publication of application: **14.08.2019**
(21) Application number: 19154437.8
(22) Date of filing: 30.01.2019
(51) Int. Cl.: G06F 9/451

(54) **METHOD FOR BROADCASTING USER SESSIONS, HOST COMPUTER FOR IMPLEMENTING SUCH A METHOD, AND METHOD FOR PROVIDING SERVICES TO A USER**

(30) Priority: 09.02.2018 FR 1851113; 20.09.2018 FR 1858531
(71) Applicant: Blade, 75002 Paris (FR)
(72) Inventor: DARSCH, Amaury, 56100 LORIENT (FR)
(74) Representative: IP Trust

(57) **Abstract**

The invention relates to method for simultaneously interacting with a user session (3) from a plurality of remote subscribers (4, 4', 4"), each remote subscriber providing subscriber information to the user session (3), the method comprising the step of:
- Receiving subscriber information from each remote subscriber (4, 4', 4") at respective reception ports (54) of a broadcast platform (5) ;
- Aggregating, at the broadcast platform (5), the subscriber information to form a control stream;
- Providing, from an emission port (52) of the broadcast platform (5), the control stream to the user session (3)

## Description

### FIELD OF THE INVENTION

The present invention relates to a method for managing user sessions, the user sessions being executed on servers of a host computer. Each user session may be associated to a remote client, and display and control information being communicated between each user session and its associated client.

### BACKGROUND OF THE INVENTION

US2017228851 and FR3047576 disclose a computing system configuration wherein the user interface devices (display, keyboard, ...) are separated from the application processing part. The user interface devices are located at the desktop of the user (also referred to as the "client") while the processing and storage components of the computer are placed in a remote hosting location. The user interface devices have then access, at the host computer, to a dedicated virtual machine through a network (most usually Internet), the virtual machine emulating the required processing, storage, and other computing resources. The host computer hosts the operating system and software applications utilized by the clients, thus limiting processing resources on the clients' side. The user interface devices are therefore heavily dependent on the host computer that fulfills the computational roles for the clients.

The host computer is usually consisting of a plurality of physical computing systems (servers) each hosting a plurality of virtual machines. Each virtual machine is connected to a client, and provides a dedicated virtual environment to emulate the functions of a physical personal computer, including graphic data processing, and provide the display information of the user session to the client screen. The data to be displayed are transferred through the network to the client. The client possesses sufficient computing resources to receive the data flow and display them. The client is also provided with input/output devices (keyboard, mouse...) to exchange control information or instruction to the virtual machine, via the network.

In this computing system configuration, the user sessions (i.e the isolated virtual environments that emulate the user physical personal computers) are all located at the same host or distributed over a limited number of hosts. This configuration allows users to access services that are not available in a traditional physical computer network configuration.

### OBJECT OF THE INVENTION

An object of the invention is therefore to propose methods enabling such services. More particularly, the invention proposes a method for managing user sessions, such that a user or a group of users may broadcast their computing environment to remote subscribers. The broadcasted sessions may be processed for providing services to the user. The invention also proposes a method for allowing a plurality of remote subscribers to simultaneously interact with a user session.

### SUMMARY OF THE INVENTION

To this effect, the invention relates to method for simultaneously interacting with a user session from a plurality of remote subscribers, each remote subscriber providing subscriber information to the user session, the method comprising the step of:
- Receiving subscriber information from each remote subscriber at respective reception ports of a broadcast platform ;
- Aggregating, at the broadcast platform, the subscriber information to form a control stream;

Providing, from an emission port of the broadcast platform (5), the control stream to the user session.

According to further non-limitative features of the invention, either taken alone or in any technically feasible combination:
- The method further comprises routing the session information from reception ports of the broadcast platform to emission ports of the broadcast platform;
- The method further comprising transmitting the session information from the emission ports of the broadcast platform to remote subscribers;
- the emission ports and reception ports are emission-reception ports, and wherein the method also comprises the transmission of subscriber information from at least one remote subscriber to the user session;
- the transmission of session information to the broadcast platform is performed concurrently with the transmission of session information to the remote client;
- the session information comprises display information of the user session, and possibly control information of the user session.

The invention also relates to a method for simultaneously interacting with a user session from a plurality of remote subscribers, each remote subscriber providing subscriber information to the user session, the method comprising the step of:
- Receiving subscriber information from each remote subscriber at respective reception ports of a broadcast platform;
- Aggregating, at the broadcast platform, the subscriber information to form a control stream;
- Providing, from an emission port of the broadcast platform, the control stream to the user session.

According to further non-limitative features of the invention, either taken alone or in any technically feasible combination:
- the subscriber information are received as data packets, and the step of aggregating the control information comprises storing the data packets into a FIFO memory structure;
- the user session is associated to a remote client, and the method comprises the transmission of session information between the user session and its associated client;
- wherein the subscriber information comprises information provided by at least one input device selected from the list formed of: a keyboard, a mouse, a trackpad, a touch screen, a joystick, a virtual reality mask;
- the input devices of at least two remote subscribers are different from each other.

According to another aspect, the invention relates to a host computer comprising:
- A plurality of servers each configured to execute a plurality of user sessions and to communicate session information between each user session and an associated remote client ;
- A broadcast platform in communication with the servers, to collect session information from at least some of the user sessions and emit session information from selected user sessions to remote subscribers.

The broadcast platform may comprise:
∘ a streams receiver to collect and temporarily store session information in respective reception ports ;
∘ a streams emitter to emit from respective emission ports selected sessions information to remote subscribers ;
∘ a streams router to selectively transfer session information from the reception ports to the emission ports.

### FIGURES

Many other features and advantages of the present invention will become apparent from reading the following detailed description, when considered in conjunction with the accompanying drawings, in which:
- Figure 1 represents a computing architecture for implementing the present invention;
- Figure 2a to 2c represent schematically a broadcast platform of a host computer;
- Figure 3 represents a computing architecture comprising a plurality of host computers;

### DETAILED DESCRIPTION OF SPECIFIC EMBODIMENTS OF THE INVENTION

In the following description, detailed descriptions of known functions and elements that may unnecessarily make the gist of the present invention obscure will be omitted.

### Computing architecture

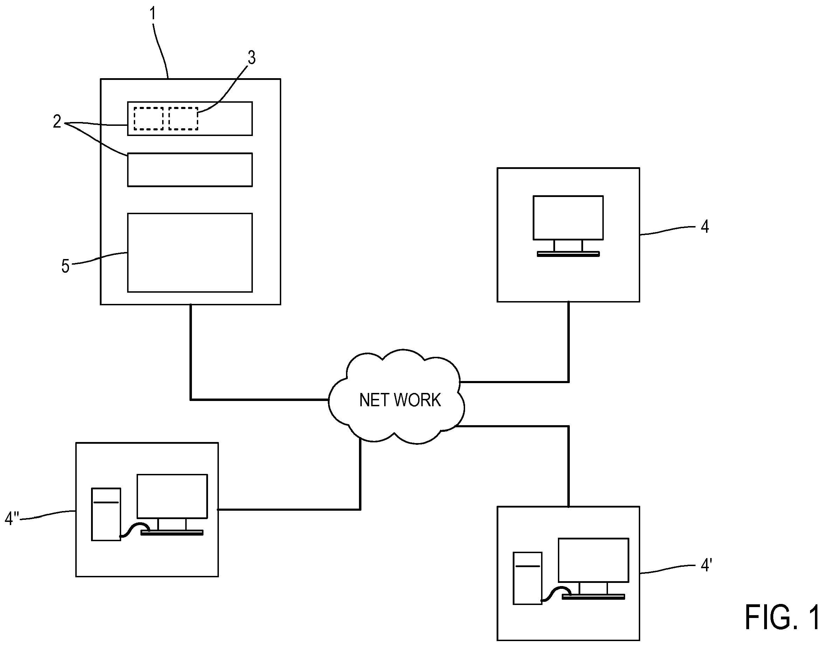

In figure 1, a computing architecture comprises a host computer 1 presenting a plurality of servers 2. As it is well known, the servers 2 may be configured to host one or a plurality of virtual machines 3, along with its operating system and applications. Virtualization allows a plurality of virtual machines 3 to be hosted into each server 2 while providing a plurality of completely isolated virtual environments within a single server 2. Well-known virtualization technologies include Citrix XenServer, Microsoft Hyper-V, VMware ESXi, Oracle Virtual box, GNU Open license based Quick Emulator (QEMU), etc.

Each of the virtual machine 3 in host computer 1 may be dedicated to one particular user. The user interacts with its dedicated virtual machine 3, from a remote client 4, 4' connected to the host computer 1 through a network such as the Internet. Since most, if not all, of the processing is performed at host computer 1, the remote clients 4, 4' may be kept very simple and may comprise, for instance, a simple terminal, network connector and basic input/output devices (keyboard, mouse, ...) such as represented by remote client 4 on figure 1. Remote client 4, 4' may also be a tablet or a smart phone. Alternatively, it could be a standard personal computer, with its own CPU, graphic card, peripherals, ... such as represented by remote client 4'. Figure 1 also represents a computing device 4" connected to the network, such as a tablet, a personal computer or a smartphone. The computing device 4" is provided with all the necessary processing resources such that all treatments are performed locally. It does not therefore take benefits from the processing resources provided by the servers 2 of host 1. Computing device 4" may however interact, i.e. exchange information, with user sessions being executed on those servers 2.

Each server 2 is preferably hosting fewer than ten virtual machines 3 to provide sufficient computing resources to each virtual machine 3 for executing high-end applications with a sufficient level of service. Each virtual machine 3 is created upon client connection and includes a virtual CPU, a virtual main memory, one virtual or physical graphic card, and other resources. Each virtual machine 3 provides a virtual high-end personal computer that is under control of a remote client 4, 4'. Each virtual machine 3 is therefore constituting or equivalent to a user session, and a large number of such user sessions 3 may be executed on the servers 2 of the host computer 1. The computing architecture may comprise a plurality of host computers 1, located in geographically separated data centers.

Each user session 3 is associated to a remote client. To display images of the user session on the remote client terminal, the host computer 1 provides over the network the remote system 4, 4' with display, sound and control information for input/output devices located at the remote site.

Conversely, the remote clients 4,4' are providing to the host computer 1 control information from input/output devices located at the remote site (keyboard, mouse), and possibly other forms of data such as display and sound information provided by a USB or built in camera and microphone of the remote client 4, 4', or network devices at the remote client locations, such as printers....

Information exchanged between the user session of host computer 1 and the remote client 4, 4' will be generally referred to as "session information" in the present disclosure.

Session information are encoded in order to limit bandwidth usage of the network. Remote clients 4, 4' are provided with appropriate hardware and/or software resources to decode/encode the communicated information before they are displayed, or more generally used on the client side, or transmitted to the host 1. Information exchanges between a user session 3 and a remote system 4, 4' (and remote subscribers, as this will be detailed later) may be performed using any protocol, such as TCP or UDP. It generally includes, on the emission side, preparing packets of payload data for each type of information (video, audio, control,...) and header information, providing the packet onto the communication medium usually by interleaving packets of different sources, and decoding data packet on the reception side using the header to reconstitute the original information. Header usually comprises sufficient information, such as identification of user session and/or remote client, such that data packets may be appropriately routed from the emitter to the receiver.

Pursuing description of figure 1, host computer 1 also comprises a broadcast platform 5. Broadcast platform 5 is in communication with the servers 2 of host 1, and collect session information from at least some of the user sessions being executed on the servers 2. Concurrently with the transmission of the session information between each user session and their associated remote clients 4, 4', the session information from some selected user sessions are transmitted to the broadcast platform 5. Broadcast platform 5 is also configured to selectively emit the selected user session information to remote subscribers 4, 4', 4". In other terms, session information are transmitted between a user session and its associated remote client, and simultaneously, from the user session to the broadcast platform 5.

A remote subscriber to a particular user session may correspond to a remote client 4, 4' (associated to another user session) or to a computing device 4", that has connected to the host 1 and subscribed for receiving session information of the particular user session. Said differently, a remote subscriber of a user session is distinct from the remote client associated with that user session.

The session information received at the remote subscriber 4, 4', 4" may be processed by the remote subscriber, for instance to be displayed on a screen at the remote location or treated to provide further services to the user session 3, to the user himself, or more generally to communicate service information to any computing device 4" on the network or to any user session 3 of host 1.

### Broadcast program

The transmission of session information from a user session 3 to the broadcast platform 5 may be performed by a broadcast program executed by the user session 3. Each user of the computing architecture may control whether their session may be broadcasted or not, and configure the broadcast parameters by accessing to the broadcast program. For instance, a user located at a remote site and operating remote client 4, 4' may configure the broadcast program to authorize the broadcast of its session 3, i.e. authorizing the broadcast program to transmit session information (display and/or control information of the session) to the broadcast platform 5. The broadcast program running in each user session 3 allows each user to enter, edit, modify and save the broadcast parameters. By doing so, a user indicates whether at least part of its computing session may be shared with remote subscribers 4, 4', 4", and under which condition. The configuration of the broadcast program may be more complex than just authorizing or blocking broadcast. For instance, a user session may include multiple desktops or screens, and the configuration may indicate which desktop or screen are to be broadcast. The configuration may also authorize or block the transmission of sounds and/or controls information, independently of the authorization or blocking of pure display data. The configuration may also list authorized or blocked remote subscribers, i.e. remote subscribers that are individually authorized or blocked from subscribing to the user session display information.

Broadcast program may also keep track of the broadcast status of the user session 3 in host 1, such that it is possible to consult at host 1 the list of available broadcasted user sessions. Such tracking may contain, for instance, a user identification, user session reference, the reception port of the broadcast platform into which the corresponding session information are collected, a list of remote subscriber that are authorized to subscribe to the user session....

### Remote subscribers

As it has been generally exposed in a previous passage of this description, a remote subscriber is a computing ressources 4, 4', 4" that subscribes to the host 1 to receive session information from at least one user session.

The remote subscriber 4, 4', 4" to a determined user session 3 may correspond to a remote client 4, 4' associated to another user session of computing architecture represented on figure 1. It may also be a computing device 4", such as a tablet, a PC, a server or a smartphone, connected to the host through a network, and not associated to any user session of the computing architecture. In a particular instance, remote subscriber may be a HTTP server that may provide free access to user session(s) display data to further computing devices connected to the network. The further computing device may then display and process the session(s) information through a web browser.

For obtaining session information from a determined user session 3, a remote subscriber 4, 4', 4" is first connecting to the host 1 and subscribes for receiving session information of the determined user session. This step may comprise accessing to and possibly updating the session tracking status stored at host 1, to select among the available user sessions one or more user session available for broadcast. The selection may for instance be based on the user identification. It may include checking whether the remote subscriber 4, 4', 4" is authorized to subscribe to the selected user session. This step may also comprise receiving an emission port identification of the broadcast platform 5, such that remote subscriber may connect and receive, in a subsequent step, the determined session information.

The remote subscriber then connects to the broadcast platform 5 and receives the session information from the determined user session.

As also mentioned generally earlier, a remote subscriber 4, 4', 4" may then process the session information. In its simplest form, the processing corresponds to the decompression and/or decoding of the session data so that they can be displayed on a screen at the remote subscriber site.

Instead of being displayed, the raw information may be communicated to further computing device, as it is the case when remote subscriber is an HTTP server.

Advantageously, the remote subscriber 4, 4', 4" (and more precisely a service program executing on the remote subscriber) is performing advanced treatment of the user information to provide service information. Image processing routine of such a service program may process the session information to provide additional (service) information to the user session, to a plurality of user sessions, or to the user himself.

For instance, image processing routine of a service program may be executed on a remote subscriber to rate the image corresponding to the displayed information for parental guidance. The detected rate (defining the service information provided by the remote subscriber) may then be communicated back to the user session, for instance to interrupt the session, if the rating is exceeding a predefined threshold. Alternatively, if the detected rate is exceeding a predefined threshold, a short message or an email may be send to a predetermined phone number or email associated with the user session.

In another instance, image processing routine running on the remote subscriber may analyze the session information for identifying errors message opening on the desktop of the user session.

Upon appearance of such a message, the remote subscriber may generate an alert to a support team that may provide assistance to the user, for instance by contacting the user by email or by phone.

A wide range of services may be provided to a user or to a user session by processing the session information by one or a plurality of remote subscribers. A particular user of the computing architecture may select the services he wishes to use by configuring the broadcast program, and authorizing the remote subscribers providing the selected services (i.e. executing the service program) to access to the user session display information.

### Broadcast platform

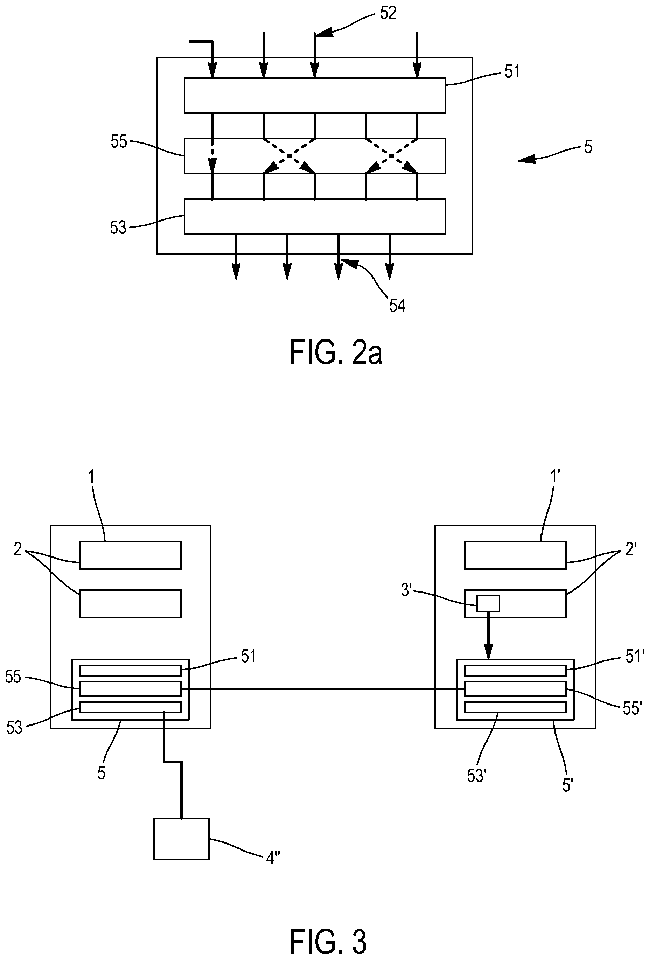

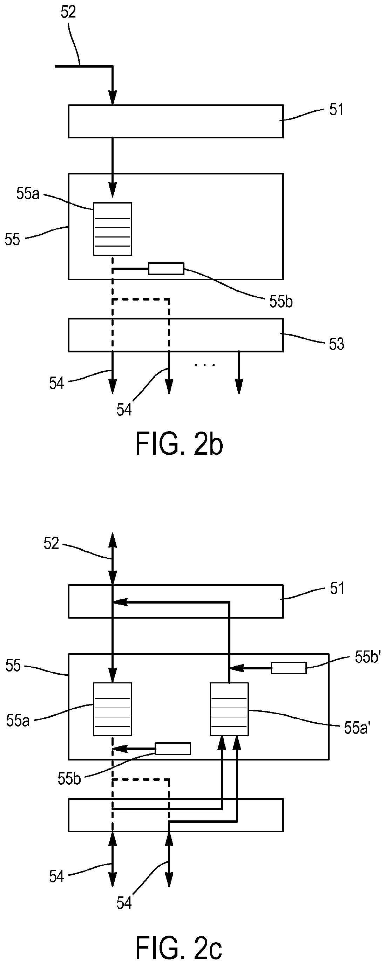

Figure 2 represents schematically the architecture of the broadcast platform 5. It comprises a streams receiver 51 which collects session information in respective reception ports 52. Sessions information from user sessions 3 are communicated by respective broadcast programs to the ports 52 and stored in temporary buffers associated to each ports.

Broadcast platform 5 also comprises a streams emitter 53 provided with a plurality of emission ports 54 for providing the respective session information to remote subscribers 4, 4', 4". When connecting to the broadcast platform, a remote subscriber is actually connecting to an emission port 54 of the stream emitter 53.

Broadcast platform 5 also comprises a streams router 55 to selectively transfer session information from the reception ports 52 to the emission ports 54. Each reception channel 52 is dedicated for receiving session information from a particular user session. Each emission channel 54 is dedicated to emitting session information to a particular remote subscriber.

Upon reception of a data packet in one reception port 52 of streams receiver 51, streams router 55 transfers the data packet to emission ports 54 of streams emitter 53, such that the data packet may be further communicated to the adequate remote subscriber(s). Figure 2b represents a detailed view of an implementation of streams router 55, in the form of a message queue system. Each reception port 52 of stream receiver 51 is in communication with a FIFO memory structure 55a. A data packet received in the reception port 52 is pushed onto the top of the FIFO memory structure 55b. Streams router 55 also comprises a distribution thread 55b to read the data packet at the bottom of FIFO memory structure 55a and to push it to one or more emission port 54 of stream emitter 53. Distribution thread 55b may access to the broadcast tracking located at host to determine into which emission port(s) 54 (ie. remote subscribers) a data packet received at a reception port 52 (ie. a determined user session) and stored in the FIFO memory structure should be communicated to. It may also access to data packet header to identify, if necessary, the user session at the origin of the data packet.

It is to be noted that the session information received in one reception port 52 may be copied to multiple emission ports 54 for transmission to multiple remote subscribers. This is the case when multiple remote subscribers have subscribed to receive the session information of the same user session. Also, the session information of multiple user sessions are received in respective reception ports 52 and may be routed to a single emission port 54 for transmitting to a single remote subscriber. This is notably the case when the remote subscriber is a HTTP server, redistributing the session information of a plurality of user sessions to further computing device connected on the network.

As mentioned above and represented on figure 3, the computing architecture compatible with the invention may comprise a plurality of hosts 1, 1', each host comprising a broadcast platform 5, 5'. A remote subscriber 4" may connect to the streams emitter 53 of a first broadcast platform 5 located at a first host 1, for receiving the session information of a user session 3' hosted in a server 2' of a second host 1', and providing session information to the streams emitter 51' of a second broadcast platform 5' of the second host 1'. In such a configuration, it is advantageous to provide high throughput link between the streams router 55 of the first broadcast platform 5 and the second streams transmitter 55' of the second broadcast platform 5'. Using this high throughput link, streams routers 55, 55' may copy reception port of one of the broadcast platform 5, 5' into the emission port of the other of the broadcast platform 5, 5'.

### Remote subscribers interaction with a user session

In a particularly advantageous embodiment of the present disclosure, a remote subscriber 4, 4', 4" may also communicate subscriber information to the user session 3 to which it is connected through the broadcast platform 5. Subscriber information may comprise any kind of data or control information, for instance control information provided by at least one input devices located at each remote subscriber location. The input devices may be of any nature, for instance a keyboard, a mouse, a trackpad, a touch screen, a joystick, a virtual reality mask. Subscriber information may also comprise or correspond to the service information provided by the remote subscriber 4, 4', 4". Subscriber information may be provided by a virtual input device, i.e. a data processing device providing information that may be treated by the user session. Subscriber information, similarly to session information, are provided as a stream of data packet, including a header identifying the remote subscriber and/or the subscribed user session, and including the payload information (i.e. input device data, service information, ...).

If a plurality of remote subscribers 4, 4', 4" are receiving session information from one of the selected user session 3, the plurality of remote subscribers 4, 4', 4" may provide their respective subscriber information to that particular user session 3. This allows a plurality of remote subscribers to simultaneously interact with the selected user session 3. For instance, a first remote subscriber may be a standard computer and interact with the user session using its keyboard and mouse input devices, while a second remote subscriber may be a smart phone and interact with the user session 3 using a touch screen or a VR mask. Having heterogeneous remote subscribers able to simultaneously interact with the same user session is an advantageous feature of the present disclosure.

Subscriber information may be received by the broadcast program of the user session 3, or by other processes being executed in the user session 3. Broadcast program may also be used to authorize or block the reception of subscriber information, generally, for particular remote subscribers or for particular type of input devices. For instance, a user may configure the broadcast program such that subscribers may only interact with the user session 3 by using their keyboard, all other type of input devices being made inoperative. More generally, broadcast program may configure all parameters relating to information provided by remote subscribers.

Preferably, the broadcast platform 5 is configured to allow the bi-directional transfer of information between the streams receiver 51 and the stream emitter 53. To this effect, ports 52, 54 are configured to be bidirectional ports, i.e. emission-reception ports. The streams router 55 is selectively transferring session information from the emission-reception port 52 of the streams receiver 51 to the emission-reception port 54 of the streams emitter 53, and is also selectively transferring subscriber information from emission-reception ports 54 of streams emitter 53 to emission-reception ports 52 of streams receiver 51.

For simultaneously interacting with a user session 3 from a plurality of remote subscribers 4, 4', 4", the subscriber informations of each remote subscriber are received at a plurality of emission-reception ports 54 of streams emitter 53 and aggregated to form a control stream. The control stream is transferred at emission-reception port 52 of the streams receiver 51 and provided to the user session 3. As represented on figure 3c, the streams router 55 may be implemented as a bi-directional message queue system. The streams router 55 comprises, for each emission-reception port 52 of streams receiver 51, a first FIFO memory structure 55a and first distribution thread 55b, similar to the one presented in relation to the description of figure 2b. The streams router 55 also comprises, for each emission-reception port 52 of streams receiver 51, a second FIFO memory structure 55a' and second distribution thread 55b'. Subscriber information received, in the form of data packets, at respective emission reception ports 54 of streams emitter 53 are stored on the top of the second FIFIO memory structure. Header information of each data packets may be decoded to identify the emission-reception port 52 of the stream receiver 51 to which it should be routed for temporary storing in the associated FIFO memory structure. Lock and release mechanism of the second FIFO memory structure allows to coordinate the asynchronous reception of data packets from each emission-reception port 54, so that they can all be effectively stored.

Second FIFO structure 55a' actually agglomerates the subscriber information into a control stream, that is then pushed, packet by packet, to emission-reception port 52 of streams receiver 51 by the second distribution thread 55b'.

As it has been shown in the present description, the broadcast platform 5 is in communication with the servers that are hosting the user sessions. The broadcast platform 5 is configured to:
- receive the subscriber information from remote subscribers 4, 4', 4", each remote subscriber being associated to a user session;
- aggregate subscriber information received from remote subscribers associated to the same user session to form a plurality of control streams, each control stream being associated to a particular user session;
- respectively provide the control streams to the associated user sessions 3.

The control information may be decoded upon their reception and processed by the user session according to their nature. A plurality of subscribers to a user session may in this way interact simultaneously with the user session.

Many variations to the disclosed embodiment can be understood and effected by those skilled in the art in practicing the claimed invention, from a study of the drawings, the disclosure, and the appended claims.

In particular, it possible to take profit of the existence of the broadcast platform 5, in particular when configured according to the advantageous embodiment that has just been exposed, for communicating display and control information from each user session 3 of host 1 to its corresponding remote client 4, 4'. In that case, each remote client 4, 4' connects to an emission-reception port 53 of the broadcast platform 5 just as a remote subscriber would connect. In that configuration, it is not necessary to provide directly (i.e. without going through broadcast platform 5) session information from each user session 3 to its associated remote client.

## Claims

1. A method for broadcasting a user session (3), the user session (3) being executed on a server (2) of a host computer (1), wherein the user session (3) is associated to a remote client (4, 4'), and the method comprises the transmission of session information between the user session (3) and its associated client (4, 4'), the method further comprising transmitting the session information from the user session (3) to a broadcast platform (5).

2. The method of claim 1, further comprising routing the session information from reception ports (52) of the broadcast platform (5) to emission ports (54) of the broadcast platform (5).

3. The method of claim 2 further comprising transmitting the session information from the emission ports (53) of the broadcast platform (5) to remote subscribers (4, 4', 4").

4. The method according to the previous claim wherein emission ports (53) and reception ports (54) are emission-reception ports (53, 54), and wherein the method also comprises the transmission of subscriber information from at least one remote subscriber (4, 4', 4") to the user session (3).

5. The method according to claim 1 wherein the transmission of session information to the broadcast platform (5) is performed concurrently with the transmission of session information to the remote client (4, 4').

6. The method according to any preceding claims wherein session information comprises display information of the user session (3), and possibly control information of the user session.

7. A method for simultaneously interacting with a user session (3) from a plurality of remote subscribers (4, 4', 4"), each remote subscriber providing subscriber information to the user session (3), the method comprising the step of:
- Receiving subscriber information from each remote subscriber (4, 4', 4") at respective reception ports (54) of a broadcast platform (5) ;
- Aggregating, at the broadcast platform (5), the subscriber information to form a control stream;
- Providing, from an emission port (52) of the broadcast platform (5), the control stream to the user session (3).

8. The method of claim 7 wherein subscriber information are received as data packets, and the step of aggregating the control information comprises storing the data packets into a FIFO memory structure (55a').

9. The method of claim 7 wherein the user session (3) is associated to a remote client (4, 4'), and the method comprises the transmission of session information between the user session (3) and its associated client (4, 4').

10. The method of claim 7 wherein the subscriber information comprises information provided by at least one input device selected from the list formed of: a keyboard, a mouse, a trackpad, a touch screen, a joystick, a virtual reality mask.

11. The method according to the preceding claim wherein the input devices of at least two remote subscribers are different from each other.

12. The method according to the previous claim comprising connecting to the host (1) and subscribing for receiving session information of the user session (3).

13. The method according to one of the two previous claims, wherein communicating service information to the user comprises transmitting the service information to the user session (3) through the broadcast platform (5).

14. A host computer (1) comprising:
- A plurality of servers (2) each configured to execute a plurality of user sessions (3) and to communicate session information between each user session and an associated remote client (4,4');
- A broadcast platform (5) in communication with the servers (2), to collect session information from at least some of the user sessions (3) and emit session information from selected user sessions (3) to remote subscribers (4, 4', 4'').

15. The host computer (1) according to the previous claim, wherein the broadcast platform (5) comprises:
- a streams receiver (51) to collect and temporarily store session information in respective reception ports (52) ;
- a streams emitter (53) to emit from respective emission ports (54) selected sessions information to remote subscribers (4, 4', 4'');
- a streams router (55) to selectively transfer session information from the reception ports (52) to the emission ports (54).

16. The host computer (1) of claim 15 or 14 wherein the broadcast platform is further configured to:
- receive subscriber information from remote subscribers (4, 4', 4"), each remote subscriber being associated to one user session (3);
- aggregate subscriber information received from remote subscribers associated to the same user session (3) to form a plurality of control streams;
- provide the control streams to the respective user sessions (3).
